# EUROPÄISCHE PATENTANMELDUNG

(11) **EP 1 491 701 A1**
(43) Veröffentlichungstag der Anmeldung: **29.12.2004**
(21) Anmeldenummer: 03014713.6
(22) Anmeldetag: 27.06.2003
(51) Int. Cl.: E04F 10/06, E06B 9/68, G08C 17/02

(54) **Steuervorrichtung zur Schaltung von Stromkreisen und Verfahren zur Festlegung und Erfassung der Endpositionen von elektrisch angetriebenen Sonnenschutzeinrichtungen**

(71) Anmelder: WEINOR Dieter Weiermann GmbH & Co., D-50829 Köln (DE)
(72) Erfinder: Stawski, Karl-Heinz, 50769 Köln (DE)
(74) Vertreter: COHAUSZ DAWIDOWICZ HANNIG & PARTNER

(57) **Zusammenfassung**

Die Erfindung betrifft eine Steuervorrichtung zur Schaltung von Stromkreisen mit zumindest einer Stromzufuhr und einem Empfänger für Funksignale und/oder Infrarotsignale einer Fernsteuerung sowie Mitteln zur Verarbeitung der Funksignale und Mitteln zur Schaltung von zumindest einem Stromkreis. Die Steuervorrichtung verfügt über zumindest einen Sensor zur Überwachung eines Umgebungsparameters und/oder über einen Zeitschaltmechanismus.

## Beschreibung

Die Erfindung betrifft eine Steuervorrichtung zur Schaltung von Stromkreisen, insbesondere von Stromkreisen für die Stromversorgung von Antriebsmotoren von Beschattungseinrichtungen wie Markisen oder Beleuchtungs- oder Beheizungsanlagen etc., wobei die Steuervorrichtung fernsteuerbar ist.

Des weiteren betrifft die Erfindung ein Verfahren zur Festlegung und Erfassung der Endpositionen von elektrisch angetriebenen Sonnenschutzeinrichtungen, insbesondere Markisen.

Es sind Steuervorrichtungen zur Schaltung von Stromkreisen bekannt, die über einen Empfänger für Funksignale und/oder Infrarotsignale verfügen, sowie Mittel zur Verarbeitung der Funksignale und Mittel zur Steuerung zumindest eines Stromkreises. Nachteilig bei diesen bekannten Steuervorrichtungen ist es jedoch, dass eine Betätigung jeweils manuell direkt an der Steuervorrichtung oder aber mittels einer Funkfernbedienung erfolgen muss. Insbesondere bei der Schaltung von Stromkreisen von Antriebsmotoren einer Beschattungseinrichtung wie einer Markise ist es nachteilig, wenn eine solche Schaltung ausschließlich infolge manueller Betätigung erfolgt. Werden bei der Schaltung solcher Stromkreise Umgebungsparameter wie beispielsweise Windstärke, Sonneneinstrahlung oder Niederschläge nicht berücksichtigt, so können Schäden an den zu steuernden Einrichtungen auftreten.

Es ist bekannt, die Endpositionen von elektrisch angetriebenen Sonnenschutzeinrichtungen, insbesondere Markisen dadurch festzulegen und zu erfassen, d.h. in der Motorsteuerung einzuspeichern, dass zwei Strom-/Spannungsversorgungsleitungen, von denen die eine Strom-/Spannungsversorgungsleitung der Ansteuerung des Ausfahrens der Sonnenschutzeinrichtung und die andere Strom-/ Spannungsversorgungsleitung der Ansteuerung des Einfahrens der Sonnenschutzeinrichtung dient, gleichzeitig aktiviert werden und die Position, die die Sonnenschutzeinrichtung im Moment der gleichzeitigen Aktivierung der zwei Strom-/ Spannungsversorgungsleitungen hat, als Endposition der Sonnenschutzeinrichtung in der Antriebsmotorsteuerung eingespeichert wird. Hierzu ist an der Bedieneinrichtung der Sonnenschutzeinrichtung ein spezieller Schalter oder eine spezielle Schalterstellung vorgesehen.

Aufgabe der Erfindung ist es, eine Steuervorrichtung zur Schaltung von Stromkreisen mit zumindest einer Stromzufuhr und einem Empfänger für Funksignale und/oder Infrarotsignale einer Fernsteuerung sowie Mitteln zur Verarbeitung der Funksignale und Mitteln zur Schaltung von zumindest einem Stromkreis zu schaffen, die es ermöglicht, unabhängig von einer manuellen Betätigung unmittelbar an der Steuervorrichtung oder mittels einer Fernbedienung Umgebungsparameter wie zum Beispiel Windstärke, Sonneneinstrahlung oder Niederschläge und/oder die Tageszeit bei der Steuerung zu berücksichtigen.

Eine weitere Aufgabe der Erfindung ist es, ein Verfahren zur Festlegung und Erfassung der Endpositionen von elektrisch angetriebenen Sonnenschutzeinrichtungen, insbesondere Markisen, bereitzustellen, mit dem es möglich ist, die Festlegung und Erfassung der Endpositionen mittels einer Fernbedienung auszulösen, ohne dass es der Betätigung eines Schalters an der Bedieneinrichtung der Sonnenschutzeinrichtung bedarf.

Die Aufgabe wird erfindungsgemäß dadurch gelöst, dass bei einer Steuervorrichtung zur Schaltung von Stromkreisen mit zumindest einer Stromzufuhr und einem Empfänger für Funksignale und/oder Infrarotsignale einer Fernsteuerung sowie Mitteln zur Verarbeitung der Funksignale und Mitteln zur Schaltung von zumindest einem Stromkreis die Steuervorrichtung über zumindest einen Sensor zur Überwachung eines Umgebungsparameters und/oder über einen Zeitschaltmechanismus verfügt.

Die weitere Aufgabe wird erfindungsgemäß dadurch gelöst, dass, insbesondere mittels einer erfindungsgemäßen Steuervorrichtung, auf ein bestimmtes Signal einer Funkfernbedienung eine Steuervorrichtung mit einem Empfänger zwei Strom-/ Spannungsversorgungsleitungen, von denen die eine Strom-/ Spannungsversorgungsleitung der Ansteuerung des Ausfahrens der Sonnenschutzeinrichtung und die andere Strom-/ Spannungsversorgungsleitung der Ansteuerung des Einfahrens der Sonnenschutzeinrichtung dient, gleichzeitig aktiviert werden und die Position, die die Sonnenschutzeinrichtung im Moment der gleichzeitigen Aktivierung der zwei Strom-/ Spannungsversorgungsleitungen hat, als Endposition der Sonnenschutzeinrichtung in der Antriebsmotorsteuerung eingespeichert werden, wobei die Auslösung der Einspeicherung einer Endposition mittels einer Funkfernbedienung jeweils einmal für die Endposition "vollständig eingefahren" und für Endposition "vollständig ausgefahren" durchgeführt wird.

Die Vorteile der erfindungsgemäßen Steuervorrichtung liegen darin, dass bei der Schaltung von Stromkreisen Umgebungsparameter überwacht und berücksichtigt werden können, und somit die zu steuernde Einrichtung vor Schäden geschützt werden kann. Neben dem Schutz der zu steuernden Einrichtung liegen weitere Vorteile der erfindungsgemäßen Steuervorrichtung darin, dass in Abhängigkeit der zu steuernden Einrichtung und in Abhängigkeit des/der überwachten Umgebungsparameter/s, beispielsweise ein Gebäude, vor Überhitzung geschützt werden oder auch gegen Einbruch gesichert werden kann.

Die Vorteile des erfindungsgemäßen Verfahrens liegen darin, dass die Festlegung und Erfassung der Endpositionen von elektrisch angetriebenen Sonnenschutzeinrichtungen, insbesondere Markisen, unter Verwendung einer Fernbedienung möglich ist und somit der Ausfahrvorgang unmittelbar überwacht werden kann, da eine Bedienung mittels einer Fernbedienung standortunabhängig im Bereich der Reichweite der Fernbedienung ist und damit eine bessere Beobachtung des Ausfahrvorgangs erfolgen kann, da es nicht erforderlich ist, eine festinstallierte Bedieneinrichtung zu betätigen. Ein weiterer Vorteil liegt darin, dass das Verfahren sich auf den bekannten Stand der Technik zur Festlegung und Erfassung der Endpositionen von elektrisch angetriebenen Sonnenschutzeinrichtungen, insbesondere Markisen, stützt, und damit unabhängig vom Hersteller der Antriebseinrichtung universell einsetzbar ist.

Vorteilhafte Ausgestaltungen der Erfindung sind in den Unteransprüchen aufgeführt.

Ein weiteres Merkmal der erfindungsgemäßen Steuervorrichtung zur Schaltung von Stromkreisen kann sein, dass Mittel vorgesehen sind, um eine Endposition einer Sonnenschutzeinrichtung, insbesondere einer Markise in der Antriebsmotorsteuerung der Sonnenschutzeinrichtung dadurch einzuspeichern, dass auf ein bestimmtes Signal der Funkfernbedienung oder durch manuelle Betätigung der Steuervorrichtung zwei Stromspannungsversorgungsleitungen gleichzeitig durchgeschaltet werden, von denen die eine Stromspannungsversorgungsleitung der Ansteuerung des Ausfahrens der Sonnenschutzeinrichtung und die andere Stromspannungsversorgungsleitung der Ansteuerung des Einfahrens der Sonnenschutzeinrichtung dient.

Des weiteren können Mittel vorgesehen sein, um zumindest eine Stromspannungsversorgungsleitung mit einer beliebigen Spannung und/oder beliebigen Stromstärke zu beaufschlagen, um insbesondere eine Beleuchtungseinrichtung zu dimmen und/oder die Heizleistung einer Beheizungseinrichtung zu regeln.

Zur Überwachung relevanter Umgebungsparameter können alternativ oder kumulativ insbesondere ein Temperatursensor, ein Sensor zur Erfassung der Lichtstärke, insbesondere eine Fotozelle, ein Sensor zur Erfassung der Windstärke, ein Sensor zur Erfassung von Niederschlägen und/oder ein Bewegungssensor vorgesehen sein.

In einer weiteren vorteilhaften Ausgestaltung weist die Steuervorrichtung einen Sender für Funksignale und/oder Infrarotsignale auf, der die momentan automatisch und/oder manuell eingestellten Steuerungszustände und/oder die Messwerte der Sensoren zu einer Funkfernbedienung überträgt, wobei diese Funkfernbedienung einen Empfänger und ein Anzeigegerät zur Wiedergabe der ermittelten Steuerungszustände und/oder Messwerte aufweist.

Die erfindungsgemäße Steuervorrichtung, insbesondere zur Durchführung des erfindungsgemäßen Verfahrens, ist vorzugsweise so dimensioniert, dass sie in eine Standardunterputzdose (Schalterdose) eingebaut werden kann, insbesondere in eine Schalterdose mit einem Durchmesser von 66 mm, oder alternativ mit einem Gehäuse für eine Aufputzmontage ausgeführt ist. In einer weiteren Ausführungsform weist die Steuervorrichtung einen Spritzwasserschutz auf, so dass sie für die Montage und den Betrieb im Aussenbereich geeignet ist.

Der Aufbau der erfindungsgemäßen Steuervorrichtung ist vorzugsweise modular, so dass die Steuereinheit als ganzes austauschbar oder um weitere Funktionen, d.h. Berücksichtung weiterer Sensor- und/oder Fernbedienungssignale und/oder Zeitschaltmechanismen, erweiterbar ist.

## Patentansprüche

1. Steuervorrichtung zur Schaltung von Stromkreisen mit zumindest einer Stromzufuhr und einem Empfänger für Funksignale und/oder Infrarotsignale einer Fernsteuerung sowie Mitteln zur Verarbeitung der Funksignale und Mitteln zur Schaltung von zumindest einem Stromkreis, **dadurch gekennzeichnet, dass** die Steuervorrichtung über zumindest einen Sensor zur Überwachung eines Umgebungsparameters und/oder über einen Zeitschaltmechanismus verfügt.

2. Steuervorrichtung nach Anspruch 1 , **dadurch gekennzeichnet, dass** Mittel vorgesehen sind, um eine Endposition einer Sonnenschutzeinrichtung, insbesondere einer Markise, in der Antriebsmotorsteuerung dadurch einzuspeichern, dass auf ein bestimmtes Signal der Funkfernbedienung zwei Strom-/ Spannungsversorgungsleitungen, von denen die eine Strom-/ Spannungsversorgungsleitung der Ansteuerung des Ausfahrens der Sonnenschutzeinrichtung und die andere Strom-/ Spannungsversorgungsleitung der Ansteuerung des Einfahrens der Sonnenschutzeinrichtung dient, gleichzeitig durchgeschaltet werden.

3. Steuervorrichtung nach einem der vorherigen Ansprüche, **dadurch gekennzeichnet, dass** Mittel vorgesehen sind, um zumindest eine Stromversorgungsleitung mit einer beliebigen Spannung und/oder beliebigen Stromstärke zu beaufschlagen.

4. Steuervorrichtung nach einem der vorherigen Ansprüche, **dadurch gekennzeichnet, dass** sie einen Temperatursensor aufweist.

5. Steuervorrichtung nach einem der vorherigen Ansprüche, **dadurch gekennzeichnet, dass** sie einen Sensor zur Erfassung der Lichtstärke, insbesondere eine Photozelle, aufweist.

6. Steuervorrichtung nach einem der vorherigen Ansprüche, **dadurch gekennzeichnet, dass** sie einen Sensor zur Erfassung der Windstärke aufweist.

7. Steuervorrichtung nach einem der vorherigen Ansprüche, **dadurch gekennzeichnet, dass** sie einen Sensor zur Erfassung von Niederschlägen aufweist.

8. Steuervorrichtung nach einem der vorherigen Ansprüche, **dadurch gekennzeichnet, dass** sie einen Bewegungssensor aufweist.

9. Steuervorrichtung nach einem der vorherigen Ansprüche, **dadurch gekennzeichnet, dass** sie einen Sender für Funksignale und/oder Infrarotsignale aufweist, der die momentan automatisch und/oder manuell eingestellten Steuerungszustände und/oder die Meßwerte der Sensoren zu einer Funkfernbedienung überträgt, wobei diese Funkfernbedienung einen Empfänger und ein Anzeigegerät zur Wiedergabe der übermittelten Steuerungszustände und/oder Meßwerte aufweist.

10. Steuervorrichtung nach einem der vorherigen Ansprüche, **dadurch gekennzeichnet, dass** ihre Dimensionierung eine Montage in einer Standardunterputzdose (Schalterdose), insbesondere in einer Schalterdose mit einem Durchmesser von 66 mm, ermöglicht.

11. Steuervorrichtung nach einem der vorherigen Ansprüche, **dadurch gekennzeichnet, dass** sie einen Spritzwasserschutz aufweist.

12. Verfahren zur Festlegung und Erfassung der Endpositionen von elektrisch angetriebenen Sonnenschutzeinrichtungen, insbesondere Markisen, insbesondere mittels einer Vorrichtung nach einem der vorherigen Ansprüche, **dadurch gekennzeichnet, dass** auf ein bestimmtes Signal einer Funkfernbedienung eine Steuervorrichtung mit einem Empfänger zwei Strom-/ Spannungsversorgungsleitungen, von denen die eine Strom-/ Spannungsversorgungsleitung der Ansteuerung des Ausfahrens der Sonnenschutzeinrichtung und die andere Strom-/ Spannungsversorgungsleitung der Ansteuerung des Einfahrens der Sonnenschutzeinrichtung dient, gleichzeitig aktiviert werden und die Position, die die Sonnenschutzeinrichtung im Moment der gleichzeitigen Aktivierung der zwei Strom-/ Spannungsversorgungsleitungen hat, als Endposition der Sonnenschutzeinrichtung in der Antriebsmotorsteuerung eingespeichert werden, wobei die Auslösung der Einspeicherung einer Endposition mittels einer Funkfernbedienung jeweils einmal für die Endposition "vollständig eingefahren" und für Endposition "vollständig ausgefahren" durchgeführt wird.

## Geänderte Patentansprüche

### Geänderte Patentansprüche gemäss Regel 86(2) EPÜ.

**1.** Steuervorrichtung zur Schaltung von Stromkreisen mit zumindest einer Stromzufuhr und einem Empfänger für Funksignale und/oder Infrarotsignale einer Fernsteuerung sowie Mitteln zur Verarbeitung der Funksignale und Mitteln zur Schaltung von zumindest einem Stromkreis, **dadurch gekennzeichnet, dass** Mittel vorgesehen sind, um eine Endposition einer Sonnenschutzeinrichtung, insbesondere einer Markise, in der Antriebsmotorsteuerung dadurch einzuspeichern, dass auf ein bestimmtes Signal der Funkfembedienung zwei Strom-/ Spannungsversorgungsleitungen, von denen die eine Strom-/ Spannungsversorgungsleitung der Ansteuerung des Ausfahrens der Sonnenschutzeinrichtung und die andere Strom-/ Spannungsversorgungsleitung der Ansteuerung des Einfahrens der Sonnenschutzeinrichtung dient, gleichzeitig durchgeschaltet werden.

**2.** Steuervorrichtung nach Anspruch 1 , **dadurch gekennzeichnet, dass** die Steuervorrichtung über zumindest einen Sensor zur Überwachung eines Umgebungsparameters und/oder über einen Zeitschaftmechanismus verfügt.

**3.** Steuervorrichtung nach einem der vorherigen Ansprüche, **dadurch gekennzeichnet, dass** Mittel vorgesehen sind, um zumindest eine Stromversorgungsleitung mit einer beliebigen Spannung und/oder beliebigen Stromstärke zu beaufschlagen.

**4.** Steuervorrichtung nach einem der vorherigen Ansprüche, **dadurch gekennzeichnet, dass** sie einen Temperatursensor aufweist.

**5.** Steuervorrichtung nach einem der vorherigen Ansprüche, **dadurch gekennzeichnet, dass** sie einen Sensor zur Erfassung der Lichtstärke, insbesondere eine Photozelle, aufweist.

**6.** Steuervorrichtung nach einem der vorherigen Ansprüche, **dadurch gekennzeichnet, dass** sie einen Sensor zur Erfassung der Windstärke aufweist.

**7.** Steuervorrichtung nach einem der vorherigen Ansprüche, **dadurch gekennzeichnet, dass** sie einen Sensor zur Erfassung von Niederschlägen aufweist.

**8.** Steuervorrichtung nach einem der vorherigen Ansprüche, **dadurch gekennzeichnet, dass** sie einen Bewegungssensor aufweist.

**9.** Steuervorrichtung nach einem der vorherigen Ansprüche, **dadurch gekennzeichnet, dass** sie einen Sender für Funksignale und/oder Infrarotsignale aufweist, der die momentan automatisch und/oder manuell eingestellten Steuerungszustände und/oder die Meßwerte der Sensoren zu einer Funkfernbedienung überträgt, wobei diese Funkfembedienung einen Empfänger und ein Anzeigegerät zur Wiedergabe der übermittelten Steuerungszustände und/oder Meßwerte aufweist.

**10.** Steuervorrichtung nach einem der vorherigen Ansprüche, **dadurch gekennzeichnet, dass** ihre Dimensionierung eine Montage in einer Standardunterputzdose (Schalterdose), insbesondere in einer Schalterdose mit einem Durchmesser von 66 mm, ermöglicht.

**11.** Steuervorrichtung nach einem der vorherigen Ansprüche, **dadurch gekennzeichnet, dass** sie einen Spritzwasserschutz aufweist.

**12.** Verfahren zur Festlegung und Erfassung der Endpositionen von elektrisch angetriebenen Sonnenschutzeinrichtungen, insbesondere Markisen, insbesondere mittels einer Vorrichtung nach einem der vorherigen Ansprüche, **dadurch gekennzeichnet, dass** auf ein bestimmtes Signal einer Funkfernbedienung eine Steuervorrichtung mit einem Empfänger zwei Strom-/ Spannungsversorgungsleitungen, von denen die eine Strom-/ Spannungsversorgungsleitung der Ansteuerung des Ausfahrens der Sonnenschutzeinrichtung und die andere Strom-/ Spannungsversorgungsteitung der Ansteuerung des Einfahrens der Sonnenschutzeinrichtung dient, gleichzeitig aktiviert werden und die Position, die die Sonnenschutzeinrichtung im Moment der gleichzeitigen Aktivierung der zwei Strom-/ Spannungsversorgungsleitungen hat, als Endposition der Sonnenschutzeinrichtung in der Antriebsmotorsteuerung eingespeichert werden, wobei die Auslösung der Einspeicherung einer Endposition mittels einer Funkfembedienung jeweils einmal für die Endposition "vollständig eingefahren" und für Endposition "vollständig ausgefahren" durchgeführt wird.
